# EUROPÄISCHE PATENTSCHRIFT

(11) **EP 3 643 178 B1**
(45) Veröffentlichungstag und Bekanntmachung des Hinweises auf die Patenterteilung: **22.01.2025**
(21) Anmeldenummer: 19201626.9
(22) Anmeldetag: 07.10.2019
(51) Int. Cl.: A22C 11/02

(54) **VORRICHTUNG ZUM ABGEBEN VON PASTÖSEM ODER ZÄHFLIESSENDEM GUT**
DEVICE FOR DISPENSING PASTE OR VISCOUS MATERIAL
DISPOSITIF DE DISTRIBUTION D'UN PRODUIT PÂTEUX OU VISQUEUX

(30) Priorität: 22.10.2018 DE 102018126234
(43) Veröffentlichungstag der Anmeldung: 29.04.2020
(73) Patentinhaber: Heinrich Frey Maschinenbau GmbH, 89542 Herbrechtingen-Bolheim (DE)
(72) Erfinder: Frey, Heinrich, 89542 Herbrechtingen (DE); La Delfa, Marcel, 89537 Giengen/Brenz (DE)
(74) Vertreter: Manitz Finsterwald Patent- und Rechtsanwaltspartnerschaft mbB

(56) Entgegenhaltungen:
- EP-A1- 0 847 695
- EP-A1- 3 178 326
- US-A1- 2003 073 398

## Beschreibung

Die vorliegende Erfindung betrifft eine Vorrichtung zum Abgeben von pastösem oder zähfließendem Gut wie in Anspruch 1 definiert.

Ferner betrifft die Erfindung ein System wie in Anspruch 13 definiert.

Vorrichtungen mit bewegbaren Abgabeeinheiten zum Abgeben von pastösen Nahrungsmitteln oder ähnlichem sind grundsätzlich bekannt. Derartig bewegbare Abgabeeinheiten kommen beispielsweise als - auch separat vertriebene - sogenannte Vorsatzgeräte bei Wurstfüllmaschinen, welche größtenteils automatisiert arbeiten, zum Einsatz. Automatische Wurstfüllmaschinen weisen in der Regel sogenannte Abdreheinrichtungen mit Darmbremse auf, welche dazu dienen, während des Füllprozesses ein zuverlässiges Abziehen und Befüllen des Darmes und ein Abdrehen der Würste zu gewährleisten, damit eine kontinuierliche Kette von Würsten produziert werden kann. Zum Darmfüllen wird daher bei derartigen Füllmaschinen ein mit Darm bestücktes Füllrohr in diese Darmbremse eingeführt, also in die Abgabestellung gebracht, um das Wurstbrät über das Füllrohr abzugeben und so den Darm zu befüllen. Zum Wechseln des Darms muss das Füllrohr wieder aus der Darmbremse heraus in die Wartestellung zurückgezogen werden, um dessen Ende zum erneuten Bestücken mit einem Darm zugänglich zu machen.

Anstatt die Abgabeeinheit in die Wartestellung zurückzuziehen, könnte die Darmbremse bzw. Abdreheinrichtung weggeschwenkt werden. Dies ist jedoch nicht immer praktikabel, z.B. dann nicht, wenn die Abgabeeinheit zwei Füllrohre aufweist und zwischen den beiden Füllrohren gewechselt werden soll und hierzu eine die Füllrohre tragende Wechseleinheit der Abgabeeinheit verdreht werden muss, oder wenn nur eine feststehende, nicht verschwenkbare Darmbremse bzw. Abdreheinrichtung verwendet werden soll. Derartige Abgabeeinheiten mit zwei oder mehr Füllrohren sind prinzipiell beispielsweise als sogenannte "Zwillings- oder Drillingsköpfe" bereits bekannt.

Beim Bewegen der Abgabeeinheit zurück in die Wartestellung wird die Abgabeeinheit auf die Füllmaschine zu bewegt, so dass es zu einer Verkürzung des Transportweges für das Gut kommt, die in der Praxis z.B. durch ein teleskopartig in der Länge veränderliches Verbindungsrohr zwischen Füllmaschine und Abgabeeinheit kompensiert werden kann. Da das Füllgut wie z.B. Wurstbrät nicht oder nur in einem relativ geringen Ausmaß kompressibel ist, kann das Füllgut beim Zurückziehen der Abgabeeinheit nicht oder allenfalls zum Teil in die Füllmaschine zurück- oder auf dem Transportweg zusammengedrückt werden. So kommt es in der Praxis häufig zu einem Nachlaufen von Füllgut entlang des Transportweges und aus dem Abgabeende des Füllrohres hinaus, d.h. letztlich wird durch das Zurückbewegen der Abgabeeinheit eine nicht zu vernachlässigende Menge von Füllgut in die Abgabeeinheit hinein und aus dem Füllrohr herausgedrückt. Dies ist ersichtlich vor allem unter hygienischen Gesichtspunkten von Nachteil. Bisher bekannte Lösungen zum Beheben dieses Nachlaufproblems beinhalten unter anderem einen Rückzug des Guts durch eine eigens dafür eingebaute Pumpe, durch einen zwischen Füllmaschine und Abgabeeinheit eingebauten Rückzugskolben oder durch das Förderwerk der Füllmaschine. Auch ein Verschließen des Transportwegs durch die Bewegung der Abgabeeinheit selbst in die Wartestellung ist bekannt. Es hat sich in der Praxis aber herausgestellt, dass diese Lösungen zumindest den Nachteil aufweisen, dass sie die Problematik des Nachlaufens von Gut nicht hinreichend genug minimieren bzw. gänzlich vermeiden können. Außerdem können zumindest einige der oben genannten Lösungen ein erhebliches Platzproblem darstellen oder mit einem übermäßigen konstruktiven oder steuerungstechnischen Aufwand verbunden sein.

Eine Vorrichtung zum Befüllen von Wursthüllen ist beispielsweise aus EP 3 178 326 A1 bekannt, wobei ein Füllrohr am Ende eines Befüllvorgangs aus einer Füllposition axial auf ein Verschlusselement gefahren wird, um eine Öffnung des Füllrohrs zu verschließen. Jedoch kann auch hierbei sich noch in dem Füllrohr befindliches Füllgut während des Zurückziehens des Füllrohrs austreten, da das in dem Füllrohr befindliche Füllgut in Richtung des Füllrohrendes expandieren kann.

Es ist daher eine Aufgabe der Erfindung, eine Vorrichtung der eingangs genannten Art bereitzustellen, bei der ein Nachlaufen von Füllgut minimiert bzw. vermieden werden kann.

Diese Aufgabe wird durch eine Vorrichtung zum Abgeben von pastösem oder zähfließendem Gut gemäß Anspruch 1 gelöst.

Erfindungsgemäß ist ein Verschlusssystem vorgesehen, das für einen Wechsel von der Abgabestellung in die Wartestellung einen durch die Abgabeeinheit zwischen Einlass und Auslass verlaufenden Transportweg für das Gut automatisch unterbricht, um ein durch das Bewegen der Abgabeeinheit in die Wartestellung verursachtes Nachlaufen von Gut durch den Transportweg zu verhindern.

Das Verschlusssystem dient also dazu, den Transportweg zum richtigen Zeitpunkt automatisch zumindest teilweise zu verschließen, um das Gut daran zu hindern, sich weiter entlang des Transportweges zu bewegen. Durch das erfindungsgemä-βe Verschlusssystem können Verschmutzungen der Anlage zuverlässig und ohne Mehraufwand für das Bedienpersonal vermieden werden.

Gemäß einer Ausführungsform umfasst das Verschlusssystem eine Verschlusseinrichtung und eine Betätigungseinrichtung zum Betätigen der Verschlusseinrichtung. Das Verschlusssystem zeichnet sich hier dadurch aus, dass es mehrteilig ausgebildet ist, wobei die Verschlusseinrichtung als "passiver" Teil ausgestaltet und die Betätigungseinrichtung eine "aktive" Rolle übernehmen kann, indem sie die Verschlusseinrichtung betätigt. Ein Vorteil dieser Aufteilung ist, dass ein solches Verschlusssystem einfach in bestehende Abgabevorrichtungen integriert werden kann.

Eine weitere Ausführungsform sieht vor, dass die Verschlusseinrichtung an der Abgabeeinheit angeordnet und gemeinsam mit der Abgabeeinheit relativ zu der Betätigungseinrichtung bewegbar ist. Die Anordnung der Verschlusseinrichtung an der Abgabeeinheit hat den Vorteil, dass der Transportweg des Guts besonders einfach an jener Stelle unterbrochen werden kann, an der die Problematik des Nachlaufens entsteht. Da durch die Bewegung der Abgabeeinheit das Problem des Nachlaufens überhaupt erst auftritt, ist es vorteilhaft, die Verschlusseinrichtung auch an der Abgabeeinheit vorzusehen.

Die Betätigungseinrichtung hingegen muss nicht zwingend an der Abgabeeinheit angeordnet sein. Dies kann bedeuten, bedeutet aber nicht zwingend, dass die beiden Einrichtungen zumindest vorübergehend so voneinander getrennt werden, dass die Verschlusseinrichtung vorübergehend nicht betätigt werden kann. Es kann insbesondere genügen, wenn die Betätigungseinrichtung die Verschlusseinrichtung nur in einer der beiden Stellungen der Abgabeeinheit betätigen kann. Alternativ ist es aber auch möglich, dass zwar eine relative Bewegung zwischen der Verschlusseinrichtung und der Betätigungseinrichtung stattfindet, die beiden Einrichtungen aber dennoch in ständiger Wirkverbindung miteinander stehen oder eine ständige Wirkkonfiguration miteinander bilden, so dass die Betätigungseinrichtung die Verschlusseinrichtung jederzeit beaufschlagen kann.

Nach einem weiteren Ausführungsbeispiel ist die Betätigungseinrichtung an einer stationären Halteeinheit angeordnet. Diese Ausführungsform sieht also vor, dass die Betätigungseinrichtung stationär angeordnet ist und sich folglich nicht mit der Abgabeeinheit bewegt. Die stationäre Halteeinheit kann prinzipiell mehrere Funktionen aufweisen. Beispielsweise kann sie lediglich als Halterung für die Betätigungseinrichtung ausgestaltet sein. Alternativ ist es aber auch möglich, dass die Halteeinheit in zumindest einer der beiden Stellungen der Abgabeeinheit als Basis für die gesamte Abgabeeinheit dient, beispielsweise als eine Auflage, entlang welcher die Abgabeeinheit sich bewegen, beispielsweise gleiten, kann.

Gemäß einem Ausführungsbeispiel sind die Verschlusseinrichtung und die Betätigungseinrichtung durch Bewegen der Abgabeeinheit in deren eine Stellung, insbesondere in die Abgabestellung, in eine Wirkkonfiguration miteinander bringbar, die durch Bewegen der Abgabeeinheit in deren andere Stellung, insbesondere in die Wartestellung, aufhebbar ist. Dieses Ausführungsbeispiel sieht demnach vor, dass die Betätigungseinrichtung und die Verschlusseinrichtung nicht ständig, sondern lediglich in einer der beiden Stellungen der Abgabeeinheit, vorzugsweise in der Abgabestellung, zusammenwirken. Unter dem Begriff "Wirkkonfiguration" ist im Sinne der Erfindung also jede Konfiguration von Betätigungs- und Verschlusseinrichtung und insbesondere jegliche Art von Verbindung zu verstehen, bei der die Betätigungseinrichtung die Verschlusseinrichtung betätigen kann. Es kann sich dabei z.B. um eine mechanische Verbindung handeln oder um eine beispielsweise magnetische Kopplung. Auch andere lösbare Verbindungen sind prinzipiell denkbar.

Gemäß einer Ausführungsform ist die Wirkkonfiguration eine mechanische, insbesondere eine formschlüssige, Verbindung.

Eine weitere Ausführungsform sieht vor, dass die Wirkkonfiguration eine Übertragung von entgegengesetzt gerichteten Stellbewegungen der Betätigungseinrichtung auf die Verschlusseinrichtung ermöglicht. Hierdurch braucht die Betätigungseinrichtung lediglich zu einer Hin- und Herbewegung in der Lage zu sein, um den Transportweg sowohl unterbrechen als auch wieder freigeben zu können. Derartige Betätigungseinrichtungen lassen sich z.B. in Form von Kolben-/Zylinderanordnungen einfach und preiswert realisieren und insbesondere einfach ansteuern. Dies ist auch hinsichtlich einer möglichen Integration des Verschlusssystems in bestehende Abgabevorrichtungen von besonderem Vorteil.

Gemäß einem weiteren Ausführungsbeispiel erfolgt eine Stellbewegung der Betätigungseinrichtung zum Betätigen der Verschlusseinrichtung entlang einer Betätigungsachse, die nicht parallel zu einer Bewegungsachse verläuft, entlang welcher die Bewegung der Abgabeeinheit zwischen der Abgabestellung und der Wartestellung erfolgt. Somit kann die Betätigungseinrichtung an einer beliebigen Stelle im Bereich der Abgabeeinheit angeordnet werden, da die Stellbewegung der Betätigungseinrichtung nicht entlang derselben Achse wie die Bewegung der Abgabeeinheit erfolgen muss. Dies ist vor allem von Vorteil, wenn beengte Platzverhältnisse herrschen und das Verschlusssystem daher nicht an jedem beliebigen Ort eingesetzt werden kann. Bevorzugt verlaufen die Betätigungsachse und die Bewegungsachse senkrecht zueinander.

Ferner kann vorgesehen sein, dass die Verschlusseinrichtung ein Verschlusselement aufweist, das zwischen einer Freigabestellung, in welcher der Transportweg für das Gut freigegeben ist, und einer Sperrstellung, in welcher der Transportweg für das Gut unterbrochen ist, mittels der Betätigungseinrichtung verstellbar ist.

Gemäß einer weiteren Ausführungsform wird bei der Bewegung des Verschlusselements in die Sperrstellung zumindest ein Teil des Guts mit dem Verschlusselement aus dem Transportweg heraus bewegt und bei der Bewegung des Verschlusselements in die Freigabestellung wieder zurück in den Transportweg gebracht.

Dies bedeutet, dass trotz Unterbrechung und anschließender Freigabe des Transportwegs durch das Verschlusselement keinerlei Gut in die Umgebung gelangt.

Bevorzugt ist das Verschlusselement als Schieber, insbesondere als ein flacher, platten- oder streifenförmiger Schieber, ausgebildet. Ein Schieber kann als Verschlusselement auf vergleichsweise einfache Art und Weise den Transportweg unterbrechen und wieder freigeben, ohne unnötig viel Platz zu beanspruchen.

Vorzugsweise weist das Verschlusselement eine Durchgangsöffnung für das Gut auf, die in der Freigabestellung des Verschlusselements im Transportweg für das Gut liegt.

Nach einer Ausführungsform weist das Verschlusselement zumindest eine Anschlagfläche auf, die als Begrenzung für die Bewegung in die Sperrstellung und/oder die Freigabestellung dient. Hierdurch können vergleichsweise einfache Betätigungseinrichtungen zum Bewegen des Verschlusselements verwendet werden, die insbesondere nur zwischen zwei Endstellungen betrieben werden und nicht gezielt beliebige Zwischenstellungen ansteuern können, wie es beispielsweise bei Servomotoren der Fall ist. Dies erleichtert die Ansteuerung der Betätigungseinrichtung und damit auch eine Integration des Verschlusssystems in bestehende Abgabevorrichtungen.

Nach einer weiteren Ausführungsform weist die Verschlusseinrichtung ein, vorzugsweise mehrteiliges, Gehäuse für das Verschlusselement auf, in welchem das Verschlusselement zwischen der Freigabestellung und der Sperrstellung bewegbar ist. Das Verschlusselement kann hierbei entweder vollständig oder nur teilweise innerhalb des Gehäuses angeordnet sein. Bevorzugt weist das Gehäuse einen in der Sperrstellung des Verschlusselements von diesem unterbrochenen Durchgang für das Gut auf.

Gemäß einer Ausführungsform ist das Gehäuse mehrteilig ausgebildet und weist an einer Innenwand zumindest eines Gehäuseteils eine Aussparung auf, die als Führung für die Bewegung des Verschlusselements zwischen der Sperrstellung unter Freigabestellung ausgestaltet ist. Ein solches Gehäuse ermöglicht eine kompakte Anordnung und Führung des Verschlusselementes und lässt sich aufgrund der mehrteiligen Ausgestaltung zerlegen und folglich gut reinigen.

Des Weiteren kann vorgesehen sein, dass die Abgabeeinheit und/oder das Gehäuse eine Positionierhilfe, insbesondere an einer Außenwand einen vorzugsweise kreisrunden Vorsprung, aufweist, mittels welcher das Gehäuse relativ zur Abgabeeinheit positioniert und ein Durchgang des Gehäuses mit dem Transportweg ausgerichtet ist. Derartige Positionierhilfen können die Anbringung der Verschlusseinrichtung an der Abgabeeinheit erheblich vereinfachen. Gegebenenfalls ohnehin vorhandene Durchgänge oder Einlassöffnungen können hierfür vorteilhaft genutzt werden.

Die Betätigungseinrichtung kann als Antriebseinheit eine, insbesondere pneumatisch betreibbare, Kolben-/Zylinder-Einheit umfassen. Derartige Einheiten stellen vergleichsweise einfache und kostengünstige Antriebssysteme dar, die entgegengesetzt gerichtete Stellbewegungen bereitstellen können.

Dabei kann ein Kolben der Kolben-/Zylinder-Einheit als Stellglied ausgebildet sein oder ein Stellglied tragen, wobei das Stellglied unmittelbar mit einem Verschlusselement der Verschlusseinrichtung zusammenwirkt.

Bevorzugt ist die Betätigungseinrichtung in Abhängigkeit von der Bewegung der Abgabeeinheit ansteuerbar. Da das Verschlusssystem nur in bestimmten Stellungen bzw. Bewegungsphasen der Abgabeeinheit notwendig ist, ist es von Vorteil, wenn die Betätigungseinrichtung die Verschlusseinrichtung nur dann beaufschlagt, wenn sich die Abgabeeinheit gerade in einer solchen Stellung bzw. Bewegungsphase befindet. Dies kann erreicht werden, wenn die Ansteuerung der Betätigungseinrichtung von der Bewegung der Abgabeeinheit abgeleitet wird.

Gemäß einer bevorzugten Ausgestaltung weist die Abgabeeinheit zumindest zwei Auslässe auf, die derart an einer relativ zu einem Grundkörper der Abgabeeinheit bewegbaren Wechseleinheit angeordnet sind, dass in der Abgabestellung einer der Auslässe mit dem Transportweg korrespondiert und zumindest in der Wartestellung durch eine Bewegung der Wechseleinheit relativ zu dem Grundkörper zwischen den Auslässen gewechselt werden kann. Derartige Abgabeeinheiten, die auch als "Zwillingskopf" bezeichnet werden und z.B. mit zwei voneinander beabstandet angeordneten Füllrohren versehen sind, sind grundsätzlich bekannt und erlauben in der Praxis ein besonders effizientes Arbeiten. Da jeweils nur ein Auslass mit dem Transportweg korrespondiert, kann bereits während der Abgabe von Gut aus dem einen Auslass der andere Auslass für seinen nächsten Einsatz vorbereitet werden. In der Wartestellung kann durch die Bewegung der Wechseleinheit relativ zum Grundkörper zwischen den beiden Auslässen gewechselt werden, um den jeweils vorbereiteten Auslass für seinen anschließenden Einsatz in Position zu bringen. Die Wechseleinheit kann dafür beispielsweise drehbar am Grundkörper befestigt sein.

Ein derartiger "Zwillingskopf" kann in der Praxis meist nicht zusammen mit einer wegschwenkbaren Darmbremse bzw. Abdreheinrichtung verwendet, muss also zum Wechseln zwischen den Auslässen zurückbewegt werden. Die Erfindung ist folglich besonders für derartige Abgabeeinheiten mit Wechseleinheit vorteilhaft.

Die Erfindung betrifft außerdem ein System mit einer Füllmaschine, insbesondere einer Vakuumfüllmaschine oder Kolbenfüllmaschine, einer erfindungsgemäßen Abgabevorrichtung und einer Verbindungseinrichtung, über welche die Füllmaschine der Abgabevorrichtung das Gut zuführt. Bekannte Vakuumfüllmaschinen sind beispielsweise Flügelzellenfüllmaschinen oder Schneckenfüllmaschinen.

Vorzugsweise ist die Verbindungseinrichtung zur Kompensation der Bewegung der Abgabeeinheit längenveränderlich, insbesondere teleskopartig, ausgebildet.

Bevorzugt ist eine Steuereinrichtung vorgesehen, die den Betrieb der Betätigungseinrichtung in Abhängigkeit von der Bewegung der Abgabeeinheit steuert, insbesondere derart, dass der Transportweg unterbrochen wird, bevor die Abgabeeinheit aus der Abgabestellung in die Wartestellung bewegt wird, und der Transportweg frühestens dann freigegeben wird, wenn die Abgabeeinheit aus der Wartestellung zurück in die Abgabestellung bewegt worden ist. Auf diese Weise herrschen sowohl beim Verschließen als auch beim nachfolgenden Freigeben des Transportwegs dieselben Druckverhältnisse entlang des Transportweges und insbesondere am Auslass der Abgabeeinheit, sodass ein Nachlaufen sicher verhindert und das exakte und gezielte Abgeben des Guts durch die Bewegung der Abgabeeinheit bzw. das zeitweise Verschließen des Transportwegs nicht beeinträchtigt wird. Außerdem lässt sich hierdurch der Abgabevorgang und insbesondere das Befüllen von Würsten mit Wurstbrät besonders einfach synchronisieren, da beim Öffnen des Schiebers derselbe Druck anliegt wie vor dem Verschließen. Bei den bisher bekannten Lösungen, welche beispielsweise ein Absaugen des Wurstbräts aus der Abgabeeinheit beinhalten, herrschen in der Abgabevorrichtung an unterschiedlichen Zeitpunkten während des Wechselprozesses zwischen den Stellungen verschiedene Druckverhältnisse, sodass der Startpunkt des anschließenden Befüllvorgangs nach jedem Wechsel neu eingestellt werden muss, um jede Wurst mit der exakt selben Menge an Wurstbrät zu befüllen, ohne z.B. Lufteinschlüsse zu verursachen. Mit anderen Worten muss die Füllmaschine vor dem dem Freigeben des Transportweges erst wieder ausreichend Gut, das zuvor zurückgesaugt wurde, heranführen, zumindest aber ausreichend Druck, der zuvor abgebaut wurde, wieder aufbauen, damit der Füllbetrieb ohne Qualitätseinbußen wieder aufgenommen werden kann. Dies erhöht den Aufwand für die Steuerung des Abgabe- bzw. Füllprozesses. Dadurch, dass erfindungsgemäß wiederkehrend gleiche Druckverhältnisse in der Abgabevorrichtung vorherrschen, kann diese Problematik vermieden werden.

Bevorzugt ist die Steuereinrichtung eine zentrale Steuereinrichtung der Füllmaschine, welche auch in der Lage ist, die Abgabevorrichtung anzusteuern. Auf diese Weise kann sichergestellt werden, dass das Gut von der Füllmaschine nur dann an der Abgabevorrichtung bereitgestellt wird, wenn sich die Abgabeeinheit in der Abgabestellung befindet. Befindet sich die Abgabeeinheit in der Wartestellung, wird folglich die Zuführung von Gut unterbrochen bzw. abgewartet. Alternativ weist die Abgabevorrichtung eine eigene Steuereinrichtung auf, die mit einer Steuereinrichtung der Füllmaschine oder mit einer übergeordneten Steuerung eine Gesamtanlage, von der das System aus Füllmaschine und Abgabevorrichtung ein Bestandteil ist, kommunizieren kann. Dabei ist bevorzugt vorgesehen, dass die Steuereinrichtung der Füllmaschine oder die übergeordnete Steuerung einen "Master" bildet und die Steuereinrichtung der Abgabevorrichtung als "Slave" dient.

Die Erfindung betrifft außerdem ein Verfahren zum Betreiben einer erfindungsgemäßen Vorrichtung oder eines erfindungsgemäßen Systems, bei dem das Verschlusssystem den Transportweg unterbricht, bevor sich die Abgabeeinheit aus der Abgabestellung in die Wartestellung bewegt, und erst dann wieder freigibt, wenn sich die Abgabeeinheit wieder zurück in die Abgabestellung bewegt hat.

Wie vorstehend bereits erwähnt, ist hierdurch in vorteilhafter Weise sichergestellt, dass beim Freigeben des Transportweges dieselben Druckverhältnisse herrschen wie vor dem vorhergehenden Unterbrechen des Transportweges, was insbesondere die Synchronisation des Prozessablaufes vereinfacht.

Die Erfindung wird im Folgenden beispielhaft unter Bezugnahme auf die Zeichnung beschrieben. In dieser zeigt:
- Fig. 1:: schematisch ein erfindungsgemäßes System aus Füllmaschine und Abgabevorrichtung;
- Fig. 2:: ein Ausführungsbeispiel eines Verschlusssystems der Abgabevorrichtung in einer Explosionsansicht;
- Fig. 3 bis 5:: einzelne Komponenten des Verschlusssystems,
- Fig. 6 bis 8:: das Verschlusssystem und eine Abgabeeinheit in unterschiedlichen Betriebsphasen.

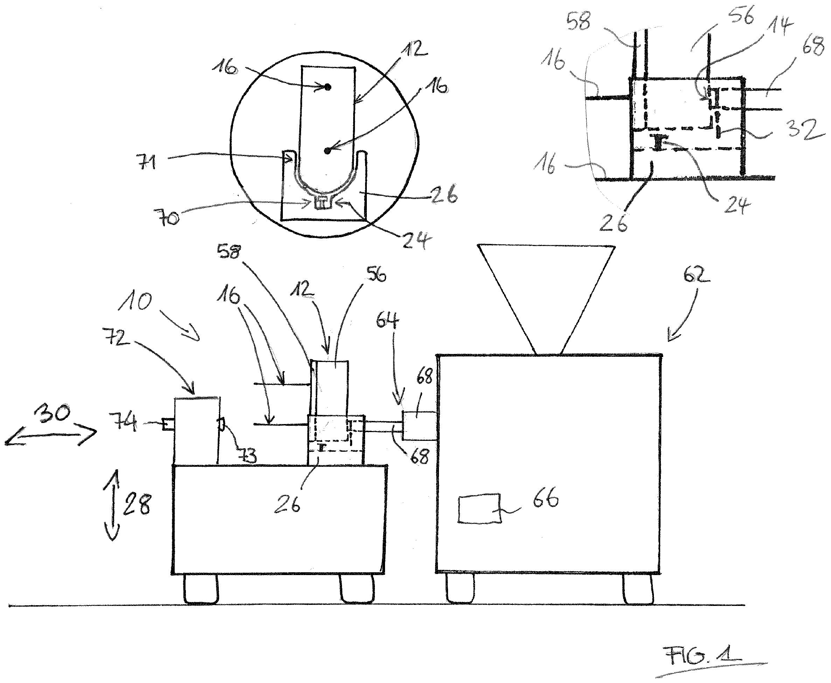

In Fig. 1 ist schematisch ein erfindungsgemäßes System aus Füllmaschine 62 und Abgabevorrichtung 10 dargestellt, wobei die Füllmaschine 62 über eine Verbindungseinrichtung 64 mit der Abgabevorrichtung 10 verbunden ist. Die Verbindungseinrichtung 64 ist hier schematisch von zwei Rohren 68 gebildet dargestellt, die teleskopartig ineinander gleiten können, wenn sich eine Abgabeeinheit 12 der Abgabevorrichtung 10 relativ zur Füllmaschine 62 bewegt.

Die Abgabeeinheit 12 ist an einer stationären, von einem Gestell getragenen Halteeinheit 26 bewegbar angebracht, welche außerdem als Träger für eine Betätigungseinrichtung 24 dient. Die linke Detailansicht in Fig. 1 zeigt die Halteeinheit 26 mit der Abgabeeinheit 12 in einer Vorderansicht auf die von der Füllmaschine 62 abgewandte Seite. Die Betätigungseinrichtung 24 ist in einer unteren Aussparung 70 der Halteeinheit 26 angeordnet. Die Abgabeeinheit 12 kann in einer oberen, größeren, im Querschnitt etwa halbkreisförmigen Aussparung 71 gleiten, und zwar relativ zu der Halteeinheit 26 und der Füllmaschine 62 entlang einer horizontalen Bewegungsachse 30. Die kleinere Aussparung 70 für die Betätigungseinrichtung 24 ist im Boden der größeren Aussparung 71 ausgebildet.

In Fig. 1 befindet sich die Abgabeeinheit 12 in einer hinteren, zurückgezogenen, näher an der Füllmaschine 62 gelegenen Wartestellung. In der vorderen, von der Füllmaschine 62 weiter entfernt gelegenen Abgabestellung liegt ein Verschlusselement 32 (vgl. rechte Detailansicht in Fig. 1) einer Verschlusseinrichtung, welche an einem Grundkörper 56 der Abgabeeinheit 12 angeordnet ist, direkt oberhalb der Betätigungseinrichtung 24, so dass die Betätigungseinrichtung 24 und das Verschlusselement 32 zusammenwirken können, was in der Wartestellung gemäß Fig. 1 nicht möglich ist. Die Betätigungseinrichtung 24 sorgt für Stellbewegungen des Verschlusselementes 32 entlang einer senkrecht zur Bewegungsachse 30 der Abgabeeinheit 12 verlaufenden Betätigungsachse 28.

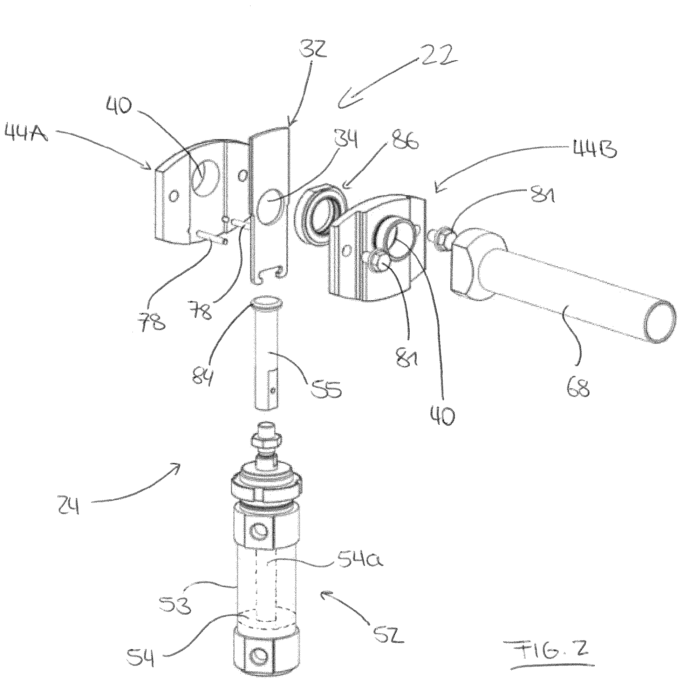

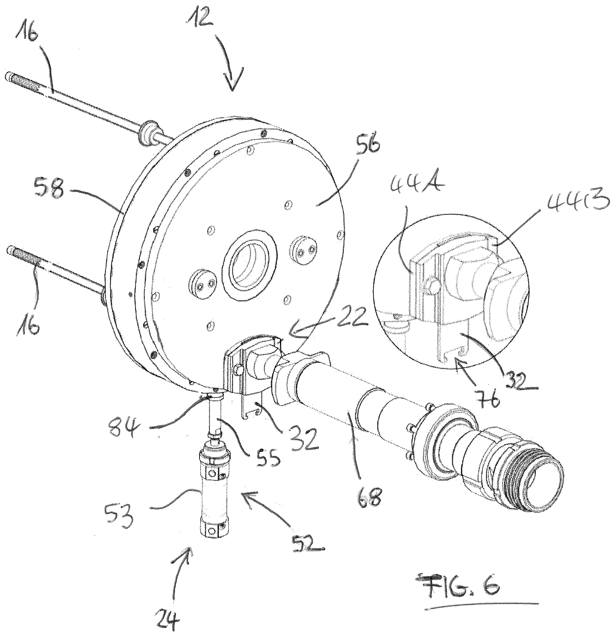

Die Ausgestaltung und die Funktionsweise der Verschlusseinrichtung 22 werden nachstehend anhand der Fig. 2 bis 5 und deren Funktionsweise im Zusammenspiel mit der Abgabeeinheit 12 anhand der Fig. 6 bis 8 näher erläutert.

Die Abgabeeinheit 12 weist zwei als Auslässe für das Gut dienende Füllrohre 16 auf, die an einer Wechseleinheit 58 der Abgabeeinheit 12 angebracht sind, welche am Grundkörper 56 um eine parallel zur Bewegungsachse 30 verlaufende Achse drehbar gelagert ist. Während des Betriebs wird das Füllgut jeweils nur über eines der Füllrohre 16 abgegeben. Das jeweils andere Füllrohr 16 ist dann nicht Bestandteil eines Transportweges für das Füllgut, der von der Füllmaschine 62 durch die Verbindungseinrichtung 64 und die Abgabeeinheit 12 hindurch zur Abgabeöffnung des aktiven Füllrohres 16 verläuft. Das aktive Füllrohr 16 befindet sich hier etwa auf gleicher Höhe wie die Verbindungsrohre 68 und wie ein im Grundkörper 56 ausgebildeter Einlass 14 (vgl. rechte Detailansicht in Fig. 1) der Abgabeeinheit 12.

Des Weiteren zeigt Fig. 1 eine am gleichen Gestell wie die Abgabeeinheit 12 angeordnete Abdreheinrichtung 72 mit Darmbremse, die eine z.B. trichterförmige Aufnahme 73 aufweist, in welche das jeweils aktive Füllrohr 16 mit seiner Abgabeöffnung hineinragt, wenn sich die Abgabeeinheit 12 in der vorderen, in Fig. 1 nicht dargestellten Abgabestellung befindet.

Während des Füllbetriebs wird über das jeweils aktive Füllrohr 16 das Füllgut in einen Darm abgegeben, der zuvor auf das Füllrohr 16 aufgezogen worden ist. Der gefüllte Darm verlässt die Abdreheinrichtung 72 über einen Auslass 74.

Aufbau und Funktionsweise von Abdreheinrichtungen und Darmbremsen sind dem Fachmann grundsätzlich bekannt, so dass hierauf nicht näher eingegangen zu werden braucht.

Die Füllmaschine 62 weist eine zentrale Steuereinrichtung 66 auf, die sowohl den Betrieb der Füllmaschine 62 als auch den Betrieb der Abgabevorrichtung 10 einschließlich des erfindungsgemäßen Verschlusssystems steuert, insbesondere die Betätigungseinrichtung 24 in Abhängigkeit von dem Ablauf des Füllprozesses und insbesondere von der Hin- und Herbewegung der Abgabeeinheit 12 zum Wechseln zwischen den Füllrohren 16. Hierzu sind Füllmaschine 62 und Abgabevorrichtung 10 in geeigneter, hier nicht dargestellter Weise steuerungstechnisch miteinander verbunden.

Im Folgenden wird der Aufbau der Verschlusseinrichtung 22 anhand der Fig. 2 bis 5 näher beschrieben. Fig 2 zeigt hierfür eine Explosionsansicht des Verschlusssystems mit der Verschlusseinrichtung 22, der Betätigungseinrichtung 24 und einem Verbindungsrohr 68.

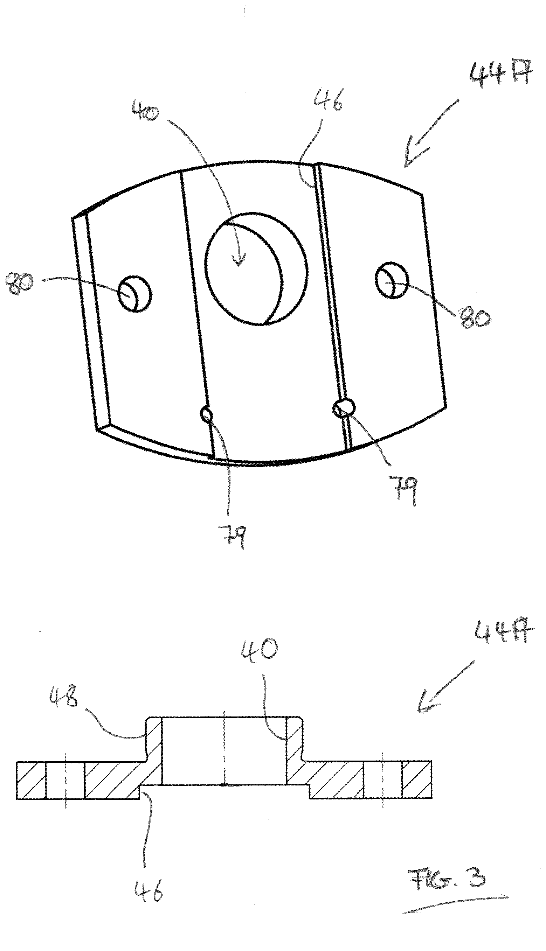

Die Verschlusseinrichtung 22 umfasst ein Gehäuse mit zwei Gehäuseteilen 44A, 44B. Beide Gehäuseteile 44A, 44B weisen einen Durchgang 40 auf, durch welchen der Transportweg für das Füllgut verläuft. Das Gehäuseteil 44A dient als Grundplatte, welche direkt am Grundkörper 56 der Abgabeeinheit 12 angebracht wird und eine Aussparung 46 (Fig. 3) aufweist, die im zusammengesetzten Zustand als Führung für das Verschlusselement 32 dient. Außerdem weisen beide Gehäuseteile 44A, 44B Schraublöcher 80 für Schrauben 81 auf, mittels welchen die beiden Gehäuseteile 44A, 44B gemeinsam, also bei zusammengesetztem Gehäuse an den Grundkörper 56 geschraubt werden.

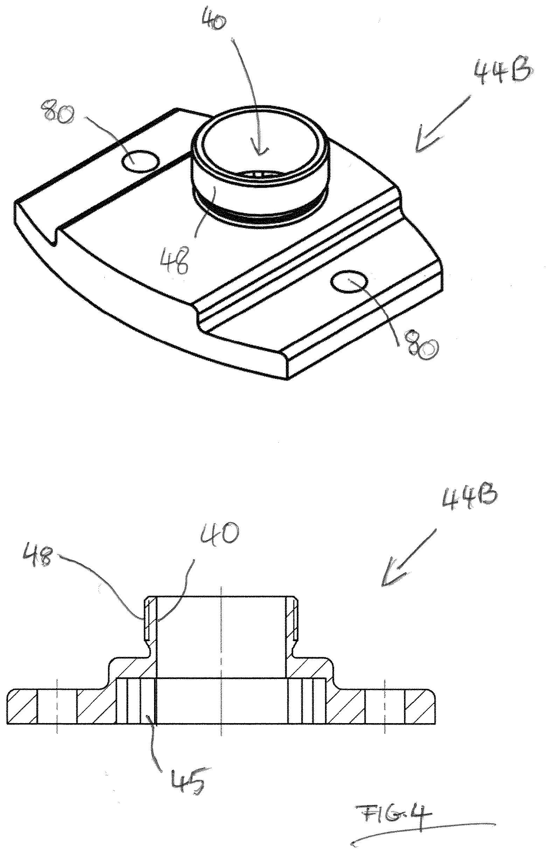

Zur Abdichtung des Gehäuses 44A, 44B nach außen ist zwischen Verschlusselement 32 und vom Grundkörper 56 entfernt gelegenem Gehäuseteil 44B ein Dichtungsring 86 angeordnet, der auf seiner dem Verschlusselement 32 zugewandten Seite aus einem anderen Material besteht als auf der dem Gehäuseteil 44B zugewandten Seite und für den das Gehäuseteil 44B mit einer Aufnahme 45 (Fig. 4) versehen ist. Der Dichtungsring 86 kann ein Verbundelement aus einem harten Material, das mit dem Verschlusselement 32 zusammenwirkt, und einem elastischen Material zur Abdichtung gegenüber dem Gehäuseteil 44B sein.

Das Gehäuseteil 44B weist außerdem an seiner Außenwand einen kreisringförmigen Vorsprung 48 auf (Fig. 4), durch welchen das Verbindungsrohr 68 an der Verschlusseinrichtung ausgerichtet wird. Auch das Gehäuseteil 44A weist einen Vorsprung 48 auf (Fig. 3), über den das Gehäuseteil 44A und somit die Verschlusseinrichtung insgesamt an der Abgabeeinheit 12 in richtiger Ausrichtung relativ zu deren Einlass 14 positioniert wird.

Im zusammengesetzten Zustand ist so ein durchgängiger Transportweg für das Füllgut von der Füllmaschine 62 bis zur Abgabeöffnung des jeweils aktiven Füllrohres 16 vorhanden.

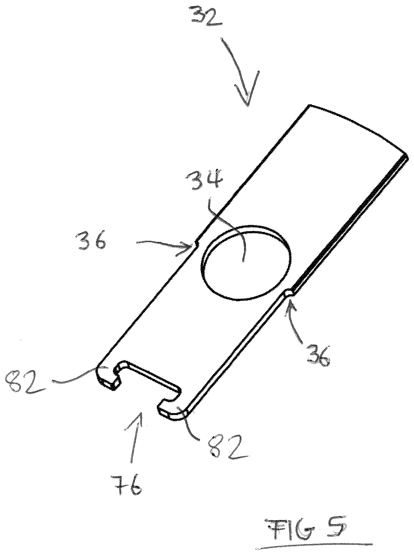

Das Verschlusselement 32 (Fig. 5) ist als flacher Schieber ausgebildet, welcher eine Durchgangsöffnung 34, zwei Anschlagflächen 36 und eine Verbindungskontur 76 aufweist.

Als Gegenstücke zu den Anschlagflächen 36 des Schiebers 32 dienen zwei Stifte 78 der Verschlusseinrichtung (Fig. 2), die zudem als Montagehilfe beim Zusammensetzen der Verschlusseinrichtung dienen können. Bewegt sich der Schieber 32 in Fig. 2 nach unten, treffen die Anschlagflächen 36 auf die Stifte 78 und stoppen die Bewegung des Schiebers 32. Als Montagehilfe dienen die Stifte 78 insofern, als die Gehäuseteile 44A, 44B an ihren jeweiligen Innenwänden Löcher 79 aufweisen, in welche die Stifte 78 beim Zusammensetzen der Verschlusseinrichtung gesteckt werden.

Die Betätigungseinrichtung 24 umfasst eine pneumatisch betriebene Kolben-/Zylinder-Anordnung. Der im Zylinder 53 bewegbare Kolben 54 trägt eine Kolbenstange 54a (beide in Fig. 2 gestrichelt dargestellt), die wiederum ein Stellglied 55 trägt, das an seinem freien Ende einen Kopf 84 in Form einer kreiszylindrischen Scheibe aufweist, die mit einer Aussparung einer nachstehend beschriebenen Verbindungskontur 76 des Schiebers 32 eine Formschlussverbindung eingehen kann.

Die Verbindungskontur 76 des Schiebers 32 umfasst zwei Laschen 82, welche einen Kopf 84 eines Stellgliedes 55 des Kolbens 54 hintergreifen können, wenn sich die Abgabeeinheit 12 in der Abgabestellung befindet. Die Laschen 82 begrenzen dabei eine Aussparung, die der Kontur des Kopfes 84 entspricht und in die sich der Kopf 84 hineinbewegt, wenn die Abgabeeinheit 12 und damit der Schieber 32 in die Abgabestellung gelangt. Durch diesen Formschluss zwischen Schieber 32 und Kopf 84 des Stellgliedes 55 ist sichergestellt, dass die Antriebseinheit 52 der Betätigungseinrichtung 24 mit Hilfe des das Stellglied 55 tragenden Kolbens 54 das Verschlusselement 32 in Fig. 2 sowohl nach oben in die Freigabestellung drücken als auch nach unten in die Sperrstellung ziehen kann (vgl. auch Fig. 6 bis 8).

Die Wirkkonfiguration zwischen Verschlusseinrichtung und Betätigungseinrichtung 24 ist folglich hergestellt, wenn durch die Bewegung der Abgabeeinheit 12 in die Abgabestellung entlang der Bewegungsachse 30 (Fig. 1) die Laschen 82 unter den Kopf 84 geschoben worden sind. Bezogen auf die Betätigungsachse 28 besteht dann eine Formschlussverbindung zwischen der Antriebseinheit 52 und dem Schieber 32. Wird die Abgabeeinheit 12 wieder zurück in die Wartestellung gebracht, gelangen die Laschen 82 außer Eingriff mit dem Kopf 84 und die Wirkkonfiguration wird wieder aufgehoben.

Die Fig. 6 bis 8 zeigen das erfindungsgemäße Verschlusssystem im zusammengesetzten und an der Abgabeeinheit 12 angebrachten Zustand. Zur Vereinfachung der Darstellung sind die weiteren Bestandteile der Abgabevorrichtung 10 (Fig. 1) nicht dargestellt, insbesondere die Halteeinheit 26, an der die Abgabeeinheit 12 in Bewegungsrichtung 30 verstellbar abgestützt und in die die Betätigungseinrichtung 24 integriert ist.

Die beiden Füllrohre 16 der zylindrischen Abgabeeinheit 12 sind an der Wechseleinheit 58 angebracht, die mittels eines nicht dargestellten Antriebs relativ zu dem Grundkörper 56 verdrehbar ist, so dass durch eine Drehung der Wechseleinheit 58 um 180 Grad zwischen den beiden Füllrohren 16 gewechselt werden kann.

Am Einlass 14 (Fig. 1) des Grundkörpers 56 ist die Verschlusseinrichtung 22 angebracht, deren Gehäuse 44A, 44B mit dem Grundkörper 56 verschraubt ist. Der Schieber 32 ragt nach unten aus dem Gehäuse 44A, 44B heraus, so dass die Verbindungskontur 76 mit dem Kopf 84 des Stellgliedes 55 der Kolben-/ZylinderEinheit 52 der Betätigungseinrichtung 24 zusammenwirken kann.

Zwischen der am Grundkörper 56 der Abgabeeinheit 12 angebrachten Verschlusseinrichtung 22 und der hier nicht dargestellten Füllmaschine 62 (Fig. 1) erstrecken sich die beiden teleskopartig ineinander geschobenen Rohre 68, von denen das eine mit dem Gehäuseteil 44B verbunden und das andere an die Füllmaschine 62 angeschlossen ist.

In Fig. 6 befindet sich die Abgabeeinheit 12 in der zurückgezogenen Wartestellung gemäß Fig. 1. Die beiden Rohre 68 sind zusammengeschoben und der Schieber 32 befindet sich in der Sperrstellung. In dieser Stellung kann an den Füllrohren 16 gearbeitet werden. Insbesondere kann das in Fig. 6 obere Füllrohr 16, auf das zuvor ein neuer Darm aufgezogen wurde, durch Verdrehen der Wechseleinheit 58 in die Position des unteren Füllrohres 16 überführt und so in den Transportweg des Guts gebracht werden. In dieser Betriebsphase ist die Füllmaschine 62 nicht aktiv und der Fördervorgang des Guts unterbrochen. Der Transportweg des Guts in die Abgabeeinheit 12 hinein ist durch den Schieber 32 unterbrochen.

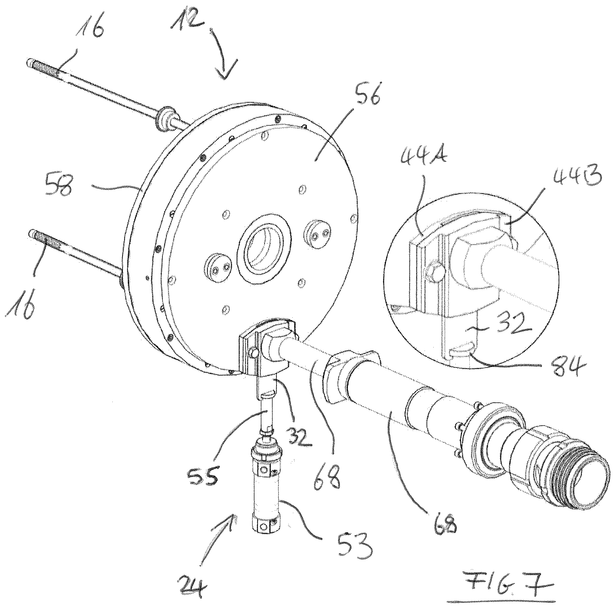

In Fig. 7 hingegen befindet sich die Abgabeeinheit 12 in der vorgeschobenen Abgabestellung. Folglich befindet sich die Verschlusseinrichtung mit dem Schieber 32 auf gleicher Höhe wie die Betätigungseinrichtung 24, d.h. die Laschen 82 des Schiebers 32 hintergreifen den Kopf 84 des Stellgliedes 55. Die beiden Rohre 68 sind aufgrund des nunmehr größeren Abstands zwischen Abgabeeinheit 12 und Füllmaschine 62 auseinandergezogen, so dass in Fig. 7 auch das innere Verbindungsrohr 68 zu sehen ist.

In Fig. 7 befindet sich der Schieber 32 noch in der Sperrstellung, da sich der Kolben 54 der Betätigungseinrichtung 24 noch in der eingefahrenen, d.h. in Fig. 7 nach unten bewegten Stellung befindet. Zu diesem Zeitpunkt hat sich also die Abgabeeinheit 12 zwar bereits in die Abgabestellung bewegt, der Fördervorgang des Guts hat allerdings noch nicht wieder begonnen.

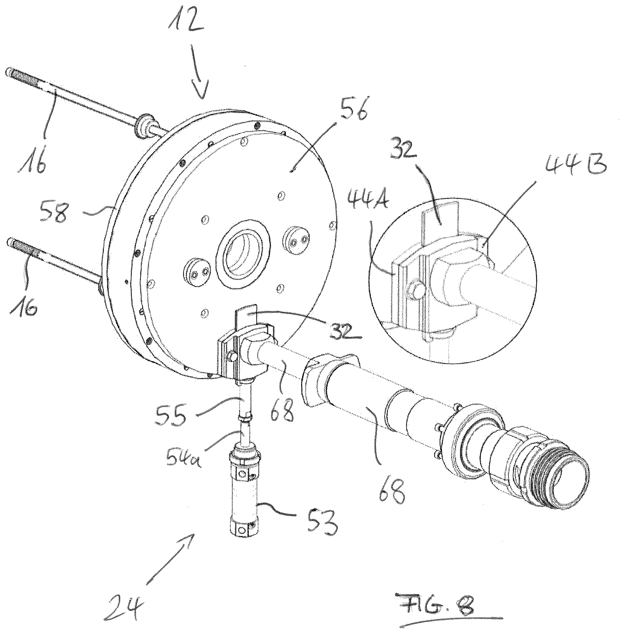

Die Fig. 8 zeigt schließlich die Arbeitssituation, in der sich die Abgabeeinheit 12 wie in Fig. 7 in der Abgabestellung befindet, der Kolben 54 aber nunmehr entlang der Betätigungsachse 28 (Fig. 1) nach oben ausgefahren ist und damit über das Stellglied 55 den Schieber 32 in die Freigabestellung gebracht hat. Der Transportweg für das abzugebende Gut ist nunmehr freigegeben und das Gut kann mittels der Füllmaschine 62 durch die beiden Rohre 68, die Verschlusseinrichtung und die Abgabeeinheit 12 hindurch zum betreffenden Füllrohr 16 gefördert werden.

Bevor für den nächsten Füllrohrwechsel die Abgabeeinheit 12 wieder zurück in die Wartestellung gemäß Fig. 6 bewegt wird, wird zunächst mittels der Steuereinrichtung 66 (Fig. 1) die Betätigungseinrichtung 24 angesteuert, um den Schieber 32 nach unten in die Sperrstellung zu ziehen und den Transportweg für das Gut wieder zu unterbrechen. Die Vorrichtung befindet sich dann wieder in dem Zustand gemäß Fig. 7. Als Endanschlag für die Anschlagflächen 36 des Schiebers 32 (Fig. 5) bei der Abwärtsbewegung dienen die beiden Stifte 78 (Fig. 2). Die Sperrstellung des Schiebers 32 ist also durch die Stifte 78 definiert und braucht nicht mittels der Betätigungseinrichtung 24 gezielt angesteuert zu werden.

Anschließend wird die Abgabeeinheit 12 bei nunmehr durch den Schieber 32 unterbrochenem Transportweg wieder in die Wartestellung gemäß Fig. 6 zurückgefahren. Hierdurch wird das auf dem Transportweg bis zum Schieber 32 befindliche Gut in den Rohren 68 komprimiert bzw. in die Füllmaschine 62 zurückgedrückt. Das Gut kann dabei aber nicht mehr in die Abgabeeinheit 12 hinein und aus dem Füllrohr 16 heraus gedrückt werden, da der Transportweg in diese Richtung durch den in der Sperrstellung befindlichen Schieber 32 unterbrochen ist.

Das in der Durchgangsöffnung 34 des Schiebers 32 (Fig. 5) befindliche Gut wird beim Öffnen des Schiebers 32 aus dem Transportweg herausbewegt, allerdings nur vorübergehend, da beim Schließen des Schiebers 32 dieses Gut wieder zurück in den Transportweg gelangt. Die Verschlusseinrichtung ist folglich derart ausgebildet, dass trotz des abwechselnden Unterbrechens und Freigebens des Transportweges die Vorrichtung nicht durch das Gut verunreinigt wird.

Generell hat die Erfindung auch den Vorteil, dass das Verschlusssystem an bestehenden Abgabevorrichtungen mit relativ geringem Aufwand nachgerüstet werden kann. Die Betätigungseinrichtung kann einfach in die Halteeinheit integriert werden. Die "mitfahrende" Verschlusseinrichtung benötigt wenig Platz, kann einfach an der Abgabeeinheit montiert werden und insofern passiv ausgebildet sein, als keine aktiven Komponenten angesteuert zu werden brauchen. Lediglich die Antriebseinheit der Betätigungseinrichtung ist anzusteuern.

Der Schutzumfang der vorliegenden Erfindung wird durch die angefügten Ansprüche definiert.

### Bezugszeichenliste

- 10: Vorrichtung
- 12: Abgabeeinheit
- 14: Einlass
- 16: Auslass, Füllrohr
- 22: Verschlusseinrichtung
- 24: Betätigungseinrichtung
- 26: Halteeinheit
- 28: Betätigungsachse
- 30: Bewegungsachse
- 32: Verschlusselement, Schieber
- 34: Durchgangsöffnung
- 36: Anschlagfläche
- 40: Durchgang
- 44A: Gehäuseteil, Grundplatte
- 44B: Gehäuseteil
- 45: Aufnahme
- 46: Aussparung
- 48: Positionierhilfe
- 52: Antriebseinheit
- 53: Zylinder
- 54: Kolben
- 54a: Kolbenstange
- 55: Stellglied
- 56: Grundkörper
- 58: Wechseleinheit
- 62: Füllmaschine
- 64: Verbindungseinrichtung
- 66: Steuereinrichtung
- 68: Rohr
- 70: Aussparung
- 71: Aussparung
- 72: Darmabdreheinrichtung
- 73: Aufnahme
- 74: Auslass
- 76: Verbindungskontur
- 78: Stift
- 79: Loch
- 80: Schraubloch
- 81: Schraube
- 82: Lasche
- 84: Kopf
- 86: Dichtungsring

## Patentansprüche

1. Vorrichtung (10) zum Abgeben von pastösem oder zähfließendem Gut, insbesondere zum Befüllen von Därmen mit Wurstbrät, mit einer Abgabeeinheit (12), die zwischen einer Abgabestellung und einer Wartestellung bewegbar ist,
wobei die Abgabeeinheit (12) durch Zurückziehen von der Abgabestellung in die Wartestellung bewegbar ist,
wobei die Abgabeeinheit (12) einen Einlass (14) zum Aufnehmen des Guts und zumindest einen Auslass (16), insbesondere ein Füllrohr, zum Abgeben des Guts aufweist,
**dadurch gekennzeichnet, dass**
ein Verschlusssystem (22, 24) vorgesehen ist, das für einen Wechsel von der Abgabestellung in die Wartestellung einen durch die Abgabeeinheit (12) zwischen Einlass (14) und Auslass (16) verlaufenden Transportweg für das Gut automatisch unterbricht, um ein durch das Bewegen der Abgabeeinheit (12) in die Wartestellung verursachtes Nachlaufen von Gut durch den Transportweg zu verhindern.

2. Vorrichtung nach Anspruch 1,
wobei das Verschlusssystem eine Verschlusseinrichtung (22) und eine Betätigungseinrichtung (24) zum Betätigen der Verschlusseinrichtung (22) umfasst.

3. Vorrichtung nach Anspruch 2,
wobei die Verschlusseinrichtung (22) an der Abgabeeinheit (12) angeordnet und gemeinsam mit der Abgabeeinheit (12) relativ zu der Betätigungseinrichtung (24) bewegbar ist, und/oder wobei die Betätigungseinrichtung (24) an einer stationären Halteeinheit (26) angeordnet ist.

4. Vorrichtung nach Anspruch 2 oder 3,
wobei die Verschlusseinrichtung (22) und die Betätigungseinrichtung (24) durch Bewegen der Abgabeeinheit (12) in deren eine Stellung, insbesondere in die Abgabestellung, in eine Wirkkonfiguration miteinander bringbar sind, die durch Bewegen der Abgabeeinheit (12) in deren andere Stellung, insbesondere in die Wartestellung, aufhebbar ist, insbesondere wobei die Wirkkonfiguration eine mechanische Verbindung ist, insbesondere eine formschlüssige Verbindung.

5. Vorrichtung nach Anspruch 4,
wobei die Wirkkonfiguration eine Übertragung von entgegengesetzt gerichteten Stellbewegungen der Betätigungseinrichtung (24) auf die Verschlusseinrichtung (22) ermöglicht.

6. Vorrichtung nach einem der Ansprüche 2 bis 5,
wobei eine Stellbewegung der Betätigungseinrichtung (24) zum Betätigen der Verschlusseinrichtung entlang einer Betätigungsachse (28) erfolgt, die nicht parallel, insbesondere senkrecht, zu einer Bewegungsachse (30) verläuft, entlang welcher die Bewegung der Abgabeeinheit (12) zwischen der Abgabestellung und der Wartestellung erfolgt.

7. Vorrichtung nach einem der Ansprüche 2 bis 6,
wobei die Verschlusseinrichtung (22) ein Verschlusselement (32) aufweist, das zwischen einer Freigabestellung, in welcher der Transportweg für das Gut freigegeben ist, und einer Sperrstellung, in welcher der Transportweg für das Gut unterbrochen ist, mittels der Betätigungseinrichtung (24) verstellbar ist, insbesondere wobei bei der Bewegung des Verschlusselements (32) in die Sperrstellung zumindest ein Teil des Guts mit dem Verschlusselement (32) aus dem Transportweg heraus bewegt und bei der Bewegung des Verschlusselements (32) in die Freigabestellung wieder zurück in den Transportweg hinein gebracht wird.

8. Vorrichtung nach Anspruch 7,
wobei das Verschlusselement (32) als Schieber ausgebildet ist, insbesondere als ein flacher, platten- oder streifenförmiger Schieber, und/oder wobei das Verschlusselement (32) eine Durchgangsöffnung (34) für das Gut aufweist, die in der Freigabestellung des Verschlusselements (32) im Transportweg für das Gut liegt, und/oder wobei das Verschlusselement (32) zumindest eine Anschlagfläche (36) aufweist, die als Begrenzung für die Bewegung in die Sperrstellung und/oder in die Freigabestellung dient.

9. Vorrichtung nach Anspruch 7 oder 8,
wobei die Verschlusseinrichtung ein, vorzugsweise mehrteiliges, Gehäuse (38) für das Verschlusselement (32) aufweist, in welchem das Verschlusselement (32) zwischen der Freigabestellung und der Sperrstellung bewegbar ist, insbesondere wobei das Gehäuse (38) einen in der Sperrstellung des Verschlusselementes (32) von diesem unterbrochenen Durchgang (40) für das Gut aufweist.

10. Vorrichtung nach Anspruch 9,
wobei das Gehäuse (38) mehrteilig ausgebildet ist und an einer Innenwand zumindest eines Gehäuseteils (44A) eine Aussparung (46) aufweist, die als Führung für die Bewegung des Verschlusselements (32) zwischen der Sperrstellung und der Freigabestellung ausgestaltet ist, und/oder wobei die Abgabeeinheit (12) und/oder das Gehäuse (38) eine Positionierhilfe (48), insbesondere an einer Außenwand einen vorzugsweise kreisrunden Vorsprung, aufweist, mittels welcher das Gehäuse (38) relativ zur Abgabeeinheit (12) positioniert und ein Durchgang (40) des Gehäuses (38) mit dem Transportweg für das Gut ausgerichtet ist.

11. Vorrichtung nach einem der Ansprüche 2 bis 10,
wobei die Betätigungseinrichtung (24) als Antriebseinheit (52) eine, insbesondere pneumatisch betreibbare, Kolben-/Zylinder-Einheit umfasst, insbesondere wobei ein Kolben (54) der Kolben-/Zylinder-Einheit als Stellglied ausgebildet ist oder ein Stellglied (55) trägt, wobei das Stellglied (55) unmittelbar mit einem Verschlusselement (32) der Verschlusseinrichtung (22) zusammenwirkt, und/oder wobei die Betätigungseinrichtung (24) in Abhängigkeit von der Bewegung der Abgabeeinheit (12) ansteuerbar ist.

12. Vorrichtung nach einem der vorhergehenden Ansprüche,
wobei die Abgabeeinheit (12) zumindest zwei Auslässe (16) aufweist, die derart an einer relativ zu einem Grundkörper (56) der Abgabeeinheit (12) bewegbaren Wechseleinheit (58) angeordnet sind, dass in der Abgabestellung einer der Auslässe (16) mit dem Transportweg korrespondiert und zumindest in der Wartestellung durch eine Bewegung der Wechseleinheit (58) relativ zu dem Grundkörper (56), insbesondere durch eine Drehbewegung, zwischen den Auslässen (16) gewechselt werden kann.

13. System (60) mit einer Füllmaschine (62), insbesondere einer Vakuumfüllmaschine oder Kolbenfüllmaschine, einer Abgabevorrichtung (10) nach zumindest einem der vorhergehenden Ansprüche und einer Verbindungseinrichtung (64), über welche die Füllmaschine (62) der Abgabevorrichtung (10) das Gut zuführt, insbesondere wobei die Verbindungseinrichtung (64) zur Kompensation der Bewegung der Abgabeeinheit (12) längenveränderlich, insbesondere teleskopartig, ausgebildet ist.

14. System nach Anspruch 13,
wobei eine Steuereinrichtung (66) vorgesehen ist, die den Betrieb der Betätigungseinrichtung (24) in Abhängigkeit von der Bewegung der Abgabeeinheit (12) steuert, insbesondere derart, dass der Transportweg unterbrochen wird, bevor die Abgabeeinheit (12) aus der Abgabestellung in die Wartestellung bewegt wird, und der Transportweg frühestens dann freigegeben wird, wenn die Abgabeeinheit (12) aus der Wartestellung zurück in die Abgabestellung bewegt worden ist.

15. Verfahren zum Betreiben einer Vorrichtung nach einem der Ansprüche 1 bis 12 oder eines Systems nach Anspruch 13 oder 14, bei dem das Verschlusssystem (22, 24) den Transportweg unterbricht, bevor sich die Abgabeeinheit (12) aus der Abgabestellung in die Wartestellung bewegt, und erst dann wieder freigibt, wenn sich die Abgabeeinheit (12) wieder zurück in die Abgabestellung bewegt hat.

## Claims

1. An apparatus (10) for dispensing pasty or viscous material, in particular for filling casings with sausage meat, comprising a dispensing unit (12) which can be moved between a dispensing position and a waiting position, wherein the dispensing unit (12) can be moved from the dispensing position into the waiting position by a pulling back,
wherein the dispensing unit (12) has an inlet (14) for receiving the material and at least one outlet (16), in particular a filling tube, for dispensing the material,
**characterized in that**
a closure system (22, 24) is provided which, for a change from the dispensing position to the waiting position, automatically interrupts a transport path for the material, said transport path running through the dispensing unit (12) between the inlet (14) and the outlet (16), in order to prevent a lagging of material through the transport path that is caused by the movement of the dispensing unit (12) into the waiting position.

2. An apparatus according to claim 1,
wherein the closure system comprises a closing device (22) and an actuating device (24) for actuating the closing device (22).

3. An apparatus according to claim 2,
wherein the closing device (22) is arranged at the dispensing unit (12) and is movable together with the dispensing unit (12) relative to the actuating device (24), and/or wherein the actuating device (24) is arranged at a stationary holding unit (26).

4. An apparatus according to claim 2 or 3,
wherein, by moving the dispensing unit (12) into its one position, in particular the dispensing position, the closing device (22) and the actuating device (24) can be brought into an active configuration with one another which can be canceled by moving the dispensing unit (12) into its other position, in particular the waiting position, in particular wherein the active configuration is a mechanical connection, in particular a form-fitting connection.

5. An apparatus according to claim 4,
wherein the active configuration enables a transmission of oppositely directed actuating movements of the actuating device (24) to the closing device (22).

6. An apparatus according to any one of the claims 2 to 5,
wherein an actuating movement of the actuating device (24) for actuating the closing device takes place along an axis of actuation (28) which does not extend parallel to, in particular extends perpendicular to, an axis of movement (30) along which the movement of the dispensing unit (12) between the dispensing position and the waiting position takes place.

7. An apparatus according to any one of the claims 2 to 6,
wherein the closing device (22) has a closing element (32) which can be adjusted by means of the actuating device (24) between a release position, in which the transport path for the material is released, and a blocking position in which the transport path for the material is interrupted, in particular wherein at least some of the material is moved out of the transport path with the closing element (32) during the movement of the closing element (32) into the blocking position and is brought back into the transport path again during the movement of the closing element (32) into the release position.

8. An apparatus according to claim 7,
wherein the closing element (32) is configured as a slider, in particular as a flat, plate-shaped or strip-shaped slider, and/or wherein the closing element (32) has a passage opening (34) for the material that lies in the transport path for the material in the release position of the closing element (32), and/or wherein the closing element (32) has at least one stop surface (36) which serves as a limit for the movement into the blocking position and/or into the release position.

9. An apparatus according to claim 7 or 8,
wherein the closing device has a housing, preferably a multi-part housing (38), for the closing element (32), in which housing the closing element (32) can be moved between the release position and the blocking position, in particular wherein the housing (38) has a passage (40) for the material, said passage being interrupted by the closing element (32) in the blocking position thereof.

10. An apparatus according to claim 9,
wherein the housing (38) is formed in multiple parts and has, at an inner wall of at least one housing part (44A), a recess (46) which is configured as a guide for the movement of the closing element (32) between the blocking position and the release position, and/or wherein the dispensing unit (12) and/or the housing (38) has/have a positioning aid (48), in particular a preferably circular projection at an outer wall, by means of which the housing (38) is positioned relative to the dispensing unit (12) and a passage (40) of the housing (38) is aligned with the transport path for the material.

11. An apparatus according to any one of the claims 2 to 10,
wherein the actuating device (24) comprises a piston/cylinder unit, in particular a pneumatically operable piston/cylinder unit, as a drive unit (52), in particular wherein a piston (54) of the piston/cylinder unit is configured as an actuator or carries an actuator (55), wherein the actuator (55) interacts directly with a closing element (32) of the closing device (22), and/or wherein the actuating device (24) can be actuated in dependence on the movement of the dispensing unit (12).

12. An apparatus according to any one of the preceding claims,
wherein the dispensing unit (12) has at least two outlets (16) which are arranged at a change unit (58), which is movable relative to a base body (56) of the dispensing unit (12), such that, in the dispensing position, one of the outlets (16) corresponds to the transport path and, at least in the waiting position, a change between the outlets (16) can be made by a movement of the change unit (58) relative to the base body (56), in particular by a rotary movement.

13. A system (60) comprising a filling machine (62), in particular a vacuum filling machine or a piston filling machine, a dispensing apparatus (10) according to at least one of the preceding claims and a connection device (64) via which the filling machine (62) feeds the material to the dispensing apparatus (10), in particular wherein the connection device (64) is variable in length, in particular telescopic, to compensate for the movement of the dispensing unit (12).

14. A system according to claim 13,
wherein a control device (66) is provided which controls the operation of the actuating device (24) in dependence on the movement of the dispensing unit (12), in particular such that the transport path is interrupted before the dispensing unit (12) is moved from the dispensing position into the waiting position, and the transport path is released at the earliest when the dispensing unit (12) has been moved from the waiting position back into the dispensing position.

15. A method of operating an apparatus according to any one of the claims 1 to 12 or a system according to claim 13 or 14, in which the closure system (22, 24) interrupts the transport path before the dispensing unit (12) moves from the dispensing position into the waiting position and only releases the transport path again when the dispensing unit (12) has moved back into the dispensing position again.

## Revendications

1. Dispositif (10) pour distribuer un produit pâteux ou visqueux, en particulier pour remplir des boyaux de chair à saucisses, comprenant une unité de distribution (12) qui peut être déplacée entre une position de distribution et une position d'attente,
l'unité de distribution (12) pouvant être déplacée par recul de la position de distribution à la position d'attente,
l'unité de distribution (12) présentant une entrée (14) pour recevoir le produit et au moins une sortie (16), en particulier un tube de remplissage, pour distribuer le produit,
**caractérisé en ce que**
il est prévu un système d'obturation (22, 24) qui, pour passer de la position de distribution à la position d'attente, interrompt automatiquement un trajet de transport du produit s'étendant à travers l'unité de distribution (12) entre l'entrée (14) et la sortie (16), afin d'empêcher une poursuite de l'écoulement du produit à travers le trajet de transport, provoquée par le déplacement de l'unité de distribution (12) vers la position d'attente.

2. Dispositif selon la revendication 1,
dans lequel le système d'obturation comprend un moyen d'obturation (22) et un moyen d'actionnement (24) pour actionner le moyen d'obturation (22).

3. Dispositif selon la revendication 2,
dans lequel le moyen d'obturation (22) est disposé sur l'unité de distribution (12) et peut être déplacé conjointement avec l'unité de distribution (12) par rapport au moyen d'actionnement (24), et/ou le moyen d'actionnement (24) est disposé sur une unité de retenue stationnaire (26).

4. Dispositif selon la revendication 2 ou 3,
dans lequel, par déplacement de l'unité de distribution (12) vers l'une de ses positions, en particulier vers la position de distribution, le moyen d'obturation (22) et le moyen d'actionnement (24) peuvent être amenés dans une configuration d'interaction susceptible d'être supprimée par le déplacement de l'unité de distribution (12) vers son autre position, en particulier vers la position d'attente,
en particulier, la configuration d'interaction est une liaison mécanique, en particulier une liaison par coopération de formes.

5. Dispositif selon la revendication 4,
dans lequel la configuration d'interaction permet de transmettre au moyen d'obturation (22) des mouvements de positionnement du moyen d'actionnement (24) dirigés dans des sens opposés.

6. Dispositif selon l'une des revendications 2 à 5,
dans lequel un mouvement de positionnement du moyen d'actionnement (24) pour actionner le moyen d'obturation s'effectue le long d'un axe d'actionnement (28) non parallèle, en particulier perpendiculaire, à un axe de déplacement (30) le long duquel s'effectue le déplacement de l'unité de distribution (12) entre la position de distribution et la position d'attente.

7. Dispositif selon l'une des revendications 2 à 6,
dans lequel le moyen d'obturation (22) comprend un élément obturateur (32) qui, à l'aide du moyen d'actionnement (24), peut être déplacé entre une position de libération dans laquelle le trajet de transport du produit est libéré, et une position de blocage dans laquelle le trajet de transport du produit est interrompu,
en particulier, lors du déplacement de l'élément obturateur (32) vers la position de blocage, au moins une partie du produit est extraite du trajet de transport par l'élément obturateur (32) et, lors du déplacement de l'élément obturateur (32) vers la position de libération, est ramenée dans le trajet de transport.

8. Dispositif selon la revendication 7,
dans lequel l'élément obturateur (32) est conçu comme un coulisseau, en particulier comme un coulisseau plat, en forme de plaque ou de bande, et/ou l'élément obturateur (32) présente une ouverture traversante (34) pour le produit qui, dans la position de libération de l'élément obturateur (32), se trouve dans le trajet de transport du produit, et/ou l'élément obturateur (32) présente au moins une surface de butée (36) qui sert de limitation pour le déplacement vers la position de blocage et/ou vers la position de libération.

9. Dispositif selon la revendication 7 ou 8,
dans lequel le moyen d'obturation comprend un boîtier (38), de préférence en plusieurs parties, pour l'élément obturateur (32), dans lequel l'élément obturateur (32) peut être déplacé entre la position de libération et la position de blocage, en particulier le boîtier (38) présentant un passage (40) pour le produit qui est interrompu par l'élément obturateur (32) dans la position de blocage de celui-ci.

10. Dispositif selon la revendication 9,
dans lequel le boîtier (38) est réalisé en plusieurs parties et présente, sur une paroi intérieure d'au moins une partie de boîtier (44A), un évidement (46) conçu comme un guidage pour le déplacement de l'élément obturateur (32) entre la position de blocage et la position de libération, et/ou l'unité de distribution (12) et/ou le boîtier (38) comprend une aide au positionnement (48), en particulier une saillie de préférence circulaire sur une paroi extérieure, à l'aide de laquelle le boîtier (38) est positionné par rapport à l'unité de distribution (12) et un passage (40) du boîtier (38) est aligné avec le trajet de transport du produit.

11. Dispositif selon l'une des revendications 2 à 10,
dans lequel le moyen d'actionnement (24) comprend comme unité d'entraînement (52) une unité à piston et cylindre, en particulier à commande pneumatique,
en particulier, un piston (54) de l'unité à piston et cylindre est conçu comme un actionneur ou porte un actionneur (55), l'actionneur (55) coopérant directement avec un élément obturateur (32) du moyen d'obturation (22), et/ou le moyen d'actionnement (24) peut être commandé en fonction du mouvement de l'unité de distribution (12).

12. Dispositif selon l'une des revendications précédentes,
dans lequel l'unité de distribution (12) présente au moins deux sorties (16) qui sont disposées sur une unité de changement (58), mobile par rapport à un corps de base (56) de l'unité de distribution (12), de telle sorte que, dans la position de distribution, l'une des sorties (16) correspond au trajet de transport, et qu'au moins dans la position d'attente, il est possible de changer entre les sorties (16) par un mouvement de l'unité de changement (58) par rapport au corps de base (56), en particulier par un mouvement de rotation.

13. Système (60) comprenant une machine de remplissage (62), en particulier une machine de remplissage sous vide ou une machine de remplissage à piston, un dispositif de distribution (10) selon l'une au moins des revendications précédentes et un dispositif de liaison (64) par lequel la machine de remplissage (62) amène le produit au dispositif de distribution (10), en particulier le dispositif de liaison (64) étant conçu de manière à pouvoir être modifié en longueur, en particulier par voie télescopique, pour compenser le mouvement de l'unité de distribution (12).

14. Système selon la revendication 13,
dans lequel il est prévu un dispositif de commande (66) qui commande le fonctionnement du moyen d'actionnement (24) en fonction du mouvement de l'unité de distribution (12), en particulier de telle sorte que le trajet de transport est interrompu avant que l'unité de distribution (12) ne soit déplacée de la position de distribution vers la position d'attente, et que le trajet de transport est libéré au plus tôt lorsque l'unité de distribution (12) a été ramenée de la position d'attente vers la position de distribution.

15. Procédé d'exploitation d'un dispositif selon l'une des revendications 1 à 12 ou d'un système selon la revendication 13 ou 14,
dans lequel le système d'obturation (22, 24) interrompt le trajet de transport avant que l'unité de distribution (12) ne se déplace de la position de distribution vers la position d'attente, et ne le libère que lorsque l'unité de distribution (12) est revenue vers la position de distribution.
